(19) **Europäisches Patentamt / European Patent Office / Office européen des brevets**

(11) **EP 4 443 189 A1**

(12) # EUROPEAN PATENT APPLICATION

(43) Date of publication:
**09.10.2024  Bulletin 2024/41**

(21) Application number: **24165827.7**

(22) Date of filing: **25.03.2024**

(51) International Patent Classification (IPC):
**G01S 5/02** *(2010.01)*     **H04W 64/00** *(2009.01)*

(52) Cooperative Patent Classification (CPC):
**G01S 5/0252; H04W 64/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023  GB 202304574**

(71) Applicant: **Nokia Technologies Oy**
**02610 Espoo (FI)**

(72) Inventor: **BARBU, Oana-Elena**
**Aalborg (DK)**

(74) Representative: **Nokia EPO representatives**
**Nokia Technologies Oy**
**Karakaari 7**
**02610 Espoo (FI)**

(54) **POSITION DETERMINATION IN A COMMUNICATION SYSTEM**

(57)    The present subject matter relates to a method comprising: receiving by an apparatus (203) reference signals (s1(f3), s2(f1), s2(f4), s3(f2)) from at least one node (201.1, 201.2, 201.3), the reference signals being received in multiple carrier frequencies, processing the reference signals for obtaining per carrier frequency a signature sequence, herein referred to as receive sequence; generating per received reference signal a corresponding signature sequence, herein referred to as transmit sequence; combining the receive sequences with the transmit sequences in time domain to produce carrier-dependent channel information; determining at least one parameter of a model such that the model matches the correlation sequences; wherein the model represents the channel information, the parameter comprising a position of the apparatus; and providing the determined position of the apparatus.

Fig. 2

EP 4 443 189 A1

**Description**

Technical Field

Various example embodiments relate to telecommunication systems, and more particularly to position determination of an apparatus.

Background

The fifth generation wireless networks (5G) refer to a new generation of radio systems and network architecture. 5G is expected to provide higher bitrates and coverage than the current long term evolution (LTE) systems. 5G is also expected to increase network expandability up to hundreds of thousands of connections. The 5G may enable the localization of devices in the system. However, there is a need to enhance the overall localization accuracy.

Summary

Example embodiments provide an apparatus comprising means, the means being configured for: receiving reference signals from at least one node, the reference signals being received in multiple carrier frequencies; processing the reference signals for obtaining per carrier frequency a signature sequence, herein referred to as receive sequence; generating per received reference signal a corresponding signature sequence, herein referred to as transmit sequence; combining the receive sequences with the transmit sequences in time domain to produce carrier-dependent channel information; using the transmit sequences and attenuations of the reference signals for defining a model representing the channel information , the model comprising at least one parameter, the parameter comprising a position of the apparatus; determining a value of the at least one parameter that enables to match the model to the channel information; and providing the determined position of the apparatus.

Example embodiments provide a method comprising: receiving by an apparatus reference signals from at least one node, the reference signals being received in multiple carrier frequencies; processing the reference signals for obtaining per carrier frequency a signature sequence, herein referred to as receive sequence, resulting in multiple receive sequences; generating per received reference signal a corresponding signature sequence, herein referred to as transmit sequence, resulting in multiple transmit sequences; combining the receive sequences with the transmit sequences in time domain to produce carrier-dependent channel information; using the transmit sequences and attenuations of the reference signals for defining a model representing the channel information, the model comprising at least one parameter, the parameter comprising a position of the apparatus; determining a value of the at least one parameter that enables to match the model to the channel information; and providing the determined position of the apparatus.

Example embodiments provide a computer program comprising instructions for causing an apparatus for performing at least the following: receiving reference signals from at least one node, the reference signals being received in multiple carrier frequencies; processing the reference signals for obtaining per carrier frequency a signature sequence, herein referred to as receive sequence, resulting in multiple receive sequences; generating per received reference signal a corresponding signature sequence, herein referred to as transmit sequence, resulting in multiple transmit sequences; combining the receive sequences with the transmit sequences in time domain to produce carrier-dependent channel information; using the transmit sequences and attenuations of the reference signals for defining a model representing the channel information, the model comprising at least one parameter, the parameter comprising a position of the apparatus; determining a value of the at least one parameter that enables to match the model to the channel information; and providing the determined position of the apparatus.

Brief Description of the Drawings

The accompanying figures are included to provide a further understanding of examples, and are incorporated in and constitute part of this specification. In the figures:

FIG.1 illustrates a part of an exemplifying radio access network;

FIG. 2 is a schematic illustration of a wireless communication system;

FIG. 3 is a flowchart of a method for determining the position of an apparatus according to an example of the present subject matter;

FIG. 4 is a flowchart of a method for determining a receive sequence according to an example of the present subject matter;

FIG. 5 is a flowchart of a method for determining the position of an apparatus according to an example of the present subject matter;

FIG. 6 is a signaling diagram illustrating a method for determining the position of a user equipment (UE) according to an example of the present subject matter;

FIG. 7 is a flowchart of a method for determining the position of a user equipment (UE) in accordance with an example of the present subject matter;

FIG. 8 is a block diagram showing an example of an apparatus according to an example of the present subject matter.

Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

A communication system may be provided. The communication system comprises nodes such as base stations, wherein each node may serve user equipments (UEs) located within the node's geographical area of service or a cell. The communication system may support one or more radio access technologies (RATs). A radio access technology of the radio access technologies may, for example, be evolved universal terrestrial radio access (E-UTRA) or 5G new radio (NR), but it is not limited to, as a person skilled in the art may apply the present subject matter to other communication systems provided with necessary properties.

The communication system may be configured to provide reference signals. The reference signal may be a predetermined signal having a specific waveform, which is transmitted from a sender to a receiver and known to both the sender and the receiver. The present subject matter may advantageously use the reference signals to determine a position (or location) of an apparatus. The apparatus may, for example, be a terminal such as a user equipment (UE), a subscriber terminal, a smartphone, a mobile station, a mobile phone, a headset, a portable computer, a pad computer or another type of wireless mobile communication device operating with or without a subscriber identification module (SIM). Providing different types of apparatuses may enable a flexible implementation of the present subject matter.

In order to determine the position of the apparatus, one or more nodes of the communication system may, for example, be configured to send or broadcast reference signals. The node may, for example, be a base station, e.g., a Node B, enhanced or evolved NodeB (eNB), a home eNode B (HeNB), an access point (AP), a femto node, a femto base station, a transmit receive point (TRP) or any other equipment belonging to the communication system and implementing a radio communication interface. Providing different types of nodes may enable a flexible implementation of the present subject matter. The total number of nodes from which the reference signal is received by the apparatus may be $K$, where $K \geq 1$ or $K \geq 2$. The node may be referred to as node $k$, where $k$ is an index representing the node.

The index $k$ may be any positive integer smaller than or equal to the total number of nodes $K$. Each node $k$ of the nodes may be configured to transmit a reference signal in one carrier frequency or transmit the reference signal in more than one carrier frequency. The node k may be configured to transmit the reference signal using carrier aggregation technique or multiple input multiple output (MIMO) technique. The total number of carrier frequencies of reference signals received by the apparatus may be $M$, where $M \geq 1$ or $M \geq 2$. The carrier frequency may be referred to as $f_m$ where the subscript $m$ is an index representing the carrier frequency. The index $m$ may be any positive integer smaller than or equal to the total number of carrier frequencies $M$.

The reference signal sent by the node $k$ in the carrier frequency $f_m$ may be referred to as $s_k^{(f_m)}$. The superscript $f_m$ in $s_k^{(f_m)}$ indicates the frequency at which the reference signal is transmitted and subscript k indicates the node that transmitted the reference signal. That is, the reference signal may be indexed by a pair of carrier frequency and node.

The reference signal $s_k^{(f_m)}$ may be a radio frequency (RF) signal. The reference signal $s_k^{(f_m)}$ may comprise one or more signature sequences. The signature sequence may comprise complex values. The reference signal $s_k^{(f_m)}$ may comprise at least one signature sequence ( $y_k^{(f_m)}$ ). The superscript $f_m$ in $y_k^{(f_m)}$ indicates the frequency at which the corresponding reference signal is transmitted and subscript $k$ indicates an index of the signature sequence which is the same as the index of the node. In case the number of signature sequences in the reference signal $s_k^{(f_m)}$ is higher than one, said signature sequences may be repetitions of the same signature sequence. The signature sequence $y_k^{(f_m)}$ of the reference signal $s_k^{(f_m)}$ may, for example, be generated by the node $k$. For example, each node $k$ may generate one distinct signature sequence. The signature sequence $y_k^{(f_m)}$ may be referred to as transmit sequence.

The transmit sequence $y_k^{(f_m)}$ may be a sequence of complex values whose cyclically shifted versions are uncorrelated with one another. For example, the transmit sequence $y_k^{(f_m)}$ may have an autocorrelation property according to which the autocorrelation of the signature sequence with a cyclically shifted version of itself is zero and it is non-zero at one instant which corresponds to no cyclic shift. The transmit sequence $y_k^{(f_m)}$ may, for example, be a Constant Amplitude Zero AutoCorrelation (CAZAC) sequence or other sequences that possess the above correlation properties. The CAZAC sequence may be a periodic complex-valued signal with modulus one and out-of-phase periodic (cyclic) autocorrelations equal to zero. The transmit sequence $y_k^{(f_m)}$ of the reference signal $s_k^{(f_m)}$ may be *known* to the apparatus and the node $k$. For example, the apparatus may receive information from the node $k$ indicating the cyclic shift and the root index to be used to generate the transmit sequence $y_k^{(f_m)}$ . In another example, a shared database between the nodes and the apparatus may store information indicating the cyclic shifts and the root indexes used by the nodes.

The apparatus may be configured to perform the following method which may be referred to as correlation method. The apparatus may receive a number $R$ of reference signals. The $R$ reference signals may be received from the number $K$ of nodes in the $M$ carrier frequencies. The number of received reference signals may be higher than or equal to one, $R \geq 1$. Alternatively, the received reference signals may be multiple reference signals, $R \geq 2$. Each reference signal $s_k^{(fm)}$ of the R reference signals may be received in a carrier frequency $f_m$ from the node $k$ of the one or more nodes. The apparatus may process the received R reference signals in order obtain a receive sequence $r^{(fm)}$ associated with distinct carrier frequency $f_m$. The apparatus may generate locally the transmit sequence $y_k^{(f_m)}$ of the received reference signals $s_k^{(fm)}$ . For example, based on the frequency of the received signal and the sending node, the apparatus may have access to necessary data that enables the apparatus to generate the transmit sequence that has been used to transmit the corresponding reference signal. The apparatus may combine the receive sequence $r^{(fm)}$ with the locally generated transmit sequence $y_k^{(f_m)}$ . The combining of the receive sequence $r^{(fm)}$ with the locally generated transmit sequence $y_k^{(f_m)}$ may be performed in order to produce carrier-dependent channel information. The carrier-dependent channel information may be channel information. The channel information may be information on channels between one or more nodes and the apparatus. The channels may, for example, be defined by respective carrier frequencies. The channel information may comprise channel information per carrier frequency, and thus may be referred to as carrier-dependent channel information. For example, the channel information may be dependent on the carrier frequency because the channels described by the information may be defined by a respective carrier frequency. For example, the combining may be performed by correlating the receive sequence $r^{(fm)}$ with the locally generated transmit sequence $y_k^{(f_m)}$. The correlation may be performed in the time domain. The combination may result in a sequence ($v_k^{(fm)}$), referred to as correlation sequence, per carrier frequency $f_m$ and node $k$. The correlation sequence(s) $v_k^{(fm)}$ may comprise or indicate the carrier-dependent channel information. The correlation may, for example, be defined for a carrier frequency $f_m$ and node $k$ as a cross correlation of the receive sequence $r^{(fm)}$ and the locally generated transmit sequence $y_k^{(f_m)}$ at lag $q$ as follows: $v_k^{(fm)}(q) = \sum_{u=0}^{N-1} r^{(fm)}(u) y_k^{(fm)}((u+q)_{mod\,N})$, where $q = 0, ..., N - 1$, where $N$ is a number of samples.

Hence, the correlation method may result in one or more correlation sequences $v_k^{(fm)}$, a correlation sequence per distinct pair or bin ($f_m$, $k$) of carrier frequency $f_m$ and node $k$. The one or more correlation sequences may collectively be referred to as **V**. In case the number of nodes is one (i.e., $K = 1$) and the number of carrier frequencies is one (i.e., $M = 1$), **V** may be defined as follows: $\mathbf{V} = v_1^{(f_1)}$. In case the number of nodes is higher than one (i.e., $K > 1$) and the number of carrier frequencies is one (i.e., $M = 1$), **V** may be defined as a vector, $\mathbf{V} = [v_1^{(f_1)} \dots v_K^{(f_1)}]$. In case the number of nodes is one (i.e., $K = 1$) and the number of carrier frequencies is higher than one (i.e., $M > 1$), **V** may be defined as a vector, $\mathbf{V} = [v_1^{(f_1)} \dots v_1^{(f_M)}]$. In case the number of nodes is higher than one (i.e., $K > 1$) and the number of carrier frequencies is higher than one (i.e., $M > 1$), **V** may be defined as a $M \times K$ matrix,

$$\mathbf{V} = \begin{bmatrix} v_1^{(f_1)} & \cdots & v_K^{(f_1)} \\ \vdots & \ddots & \vdots \\ v_1^{(f_M)} & \cdots & v_K^{(f_M)} \end{bmatrix}$$

, where each row of the matrix represents a distinct carrier frequency and each column of the matrix represents a distinct node.

The correlation sequence(s) **V** may then be used as follows. A model that represents the at least one correlation sequence **V** may be defined. The model may be defined using the at least one transmit sequence $y_k^{(f_m)}$ and the attenuation of the corresponding reference signal $s_k^{(fm)}$ due to transmission. The attenuation of the reference signal $s_k^{(fm)}$ may represent the channel impulse response of the channel defined by the node $k$ and the carrier frequency $f_m$. The model may have at least one parameter. The at least one parameter may comprise the position of the apparatus.

After providing the model and its parameter(s), the apparatus may determine a value of the at least one parameter that enables to match the model to the at least one correlation sequence $V$. For example, the apparatus may be configured to perform an optimization method in order to find the at least one parameter of the model as follows. The apparatus may set the parameter to different values and compare the resulting model with the one or more correlation sequences $V$. The apparatus may search the value of the parameter that provides an optimal matching between the model and the one or more correlation sequences **V**. The optimisation method may result in determining the position of the apparatus.

For example, the model that represents the one or more correlation sequences **V** may be received at the apparatus. The model may be defined such that it provides an approximation of the one or more correlation sequences **V**, e.g., **V** = model. The model may, for example, be an empirical model based on empirical observations or a mathematical model. For defining the model, it may be assumed that that the received reference signal is a delayed and attenuated version of the original reference signal transmitted $s_k^{(fm)}$ by the node $k$. That is, the derived receive sequence $r^{(fm)}$ may be a delayed and attenuated version of the transmit sequence $y_k^{(f_m)}$. The delay ($\tau_k$) may be a delay with which the reference signal $s_k^{(fm)}$ arrives at the apparatus from the node $k$. The delay $\tau_k$ depends on the position of the apparatus with respect to the node $k$. The delay $\tau_k$ may be defined as follows $\tau_k = \tau_0 + \dfrac{d_k}{c}$, where $\tau_0$ is the clock offset of the apparatus and $\dfrac{d_k}{c}$ is the propagation delay, $d_k$ being the distance between the apparatus and the node $k$ and $c$ being the speed of light. The attenuation may be due to the line of sight (LOS) paths between the node and the apparatus. The attenuation may be quantified with an attenuation factor or coefficient. The attenuation factor may be dependent on the node transmitting the reference signal and on the carrier frequency on which it is transmitted. The attenuation factor may thus be referred to as $\alpha_k^{(fm)}$. The one or more attenuation factors may collectively be referred to as $\alpha$. In case the number of nodes is one (i.e., $K = 1$) and the number of carrier frequencies is one (i.e., $M = 1$), $\alpha$ may be defined as a scalar, $\boldsymbol{\alpha} = \alpha_1^{(f_1)}$. In case the number of nodes is higher than one (i.e., $K > 1$) and the number of carrier frequencies is one (i.e., $M = 1$), $\alpha$ may be defined as a vector, $\boldsymbol{\alpha} = [\alpha_1^{(f_1)} \dots \alpha_K^{(f_1)}]$. In case the number of nodes is one (i.e., $K = 1$) and the number of carrier frequencies is higher than one (i.e., $M > 1$), $\alpha$ may be defined as a vector, $\boldsymbol{\alpha} = [\alpha_1^{(f_1)} \dots \alpha_1^{(f_M)}]$. In case the number of nodes is higher than one (i.e., $K > 1$) and the number of carrier frequencies is higher than one (i.e., $M > 1$), $\alpha$ may be defined as a $M \times K$ matrix

$$\boldsymbol{\alpha} = \begin{bmatrix} \alpha_1^{(f_1)} & \cdots & \alpha_K^{(f_1)} \\ \vdots & \ddots & \vdots \\ \alpha_1^{(f_M)} & \cdots & \alpha_K^{(f_M)} \end{bmatrix}.$$

Based on the above assumption, the one or more correlation sequences $\mathbf{V}$ may be represented by an autocorrelation of the transmit sequence $y_k^{(f_m)}$, wherein the autocorrelation is determined for the delay $\tau_k$ and weighted with the attenuation factor(s) $\alpha$. The model may be the autocorrelation(s) of the transmit sequence(s) $y_k^{(fm)}$ which are weighted with respective attenuation factors. The autocorrelation ($\Gamma_k$) is a known feature of each node $k$ that can be evaluated using the position of the apparatus. The apparatus may have access to the autocorrelation $\Gamma_k$ of each node $k$. In case the reference signals are received from more than one node (i.e., $K > 1$), the autocorrelations may be represented by a vector as follows $\Gamma = [\Gamma_1, \dots, \Gamma_K]$.

The model may thus be defined as follows $\alpha \,.\!^{\boldsymbol{\cdot}}\, \Gamma$, where $\mathbf{V} = \alpha \,.\!^{\boldsymbol{\cdot}}\, \Gamma$. Based on the size of $\alpha$ and $\Gamma$, the operator $(.\!^{\boldsymbol{\cdot}})$ applied as $\alpha \,.\!^{\boldsymbol{\cdot}}\, \Gamma$ indicates a multiplication operator or indicates that element indexed $p$ of the vector $\alpha$ multiplies the p-th column of $\Gamma$. In case the number of nodes is one (i.e., $K = 1$) and the number of carrier frequencies is one (i.e., $M = 1$), the model may be defined as follows, $\mathbf{V} = v_1^{(f_1)} = \alpha_1^{(f_1)} \times \Gamma_1$. In case the number of nodes is higher than one (i.e., $K > 1$) and the number of carrier frequencies is one (i.e., $M = 1$), the model may be defined as follows,

$$\mathbf{V} = \left[ v_1^{(f_1)} \dots v_K^{(f_1)} \right] = \left[ \alpha_1^{(f_1)} \times \Gamma_1 \dots \alpha_K^{(f_1)} \times \Gamma_K \right].$$

In case the number of nodes is one (i.e., $K = 1$) and the number of carrier frequencies is higher than one (i.e., $M > 1$), the model may be defined as a vector,

$$\mathbf{V} = [v_1^{(f_1)} \dots v_1^{(f_M)}] = [\alpha_1^{(f_1)} \times \Gamma_1 \dots \alpha_1^{(f_M)} \times \Gamma_1].$$

In case the number of nodes is higher than one (i.e., $K > 1$) and the number of carrier frequencies is higher than one (i.e., $M > 1$), the model may be defined as follows

$$\mathbf{V} = \begin{bmatrix} v_1^{(f_1)} & \cdots & v_K^{(f_1)} \\ \vdots & \ddots & \vdots \\ v_1^{(f_M)} & \cdots & v_K^{(f_M)} \end{bmatrix} = \begin{bmatrix} \alpha_1^{(f_1)} \times \Gamma_1 & \cdots & \alpha_K^{(f_1)} \times \Gamma_K \\ \vdots & \ddots & \vdots \\ \alpha_1^{(f_M)} \times \Gamma_1 & \cdots & \alpha_K^{(f_M)} \times \Gamma_K \end{bmatrix}$$ . That is, the present subject matter may use a matrix (or array) representation for the model that represents another matrix representation of the correlation sequences, wherein an element of the matrix represents a distinct pair of carrier frequency and the node e.g., the matrix of the model is a $K \times M$ matrix and the matrix of the correlation sequences is also a $K \times M$ matrix. For example, matrix element $\mathbf{V}(1,1)$ of the correlation sequences represents the pair of carrier frequency $f_1$ and node 1. Similarly, the matrix element $(\alpha \ \cdot^{\cdot} \ \Gamma)(1,1)$ of the model represents the pair of carrier frequency $f_1$ and node 1. Using a matrix equation may be advantageous as it may enable a simultaneous matching of model elements and the corresponding correlation sequences in bins ($k$, $f_m$) of node and carrier frequency.

The defined model which represents the one or more correlation sequences $\mathbf{V}$ may have or comprise fixed or known values and one or more parameters. The values of the one or more parameters may be unknown or may need to be evaluated. The one or more parameters may thus be referred to as unknown parameters. For example, the model may be defined with fixed values such as the position of the node $k$ and unknown parameters such as the position of the apparatus, the clock offset $\tau_0$ of the apparatus and the attenuation factor(s) $\alpha$.

The present subject matter may advantageously control the number and type of unknown parameters of the model in order to find a desired balance between accuracy of the model and complexity of the model. For example, some unknown parameters may be predicted or predetermined in order to reduce the total number of unknown parameters of the model. In one example, the attenuation factor(s) $\alpha$ and the clock offset $\tau_0$ may be predicted or predetermined so that the model has as unknown parameter the position of the apparatus. For example, the attenuation factor(s) $\alpha$ may be estimated in discrete points around each node $k$ of the nodes and the clock offset $\tau_0$ may be predetermined during an initialization procedure between the apparatus and the node. Alternatively, the attenuation factor(s) $\alpha$ and the clock offset $\tau_0$ may be the most recent estimates e.g., a filtering of those estimates may be performed assuming a known correlation in time.

After providing the model and its unknown parameter(s), the apparatus may determine a value of the at least one unknown parameter that enables to match the model to the at least one correlation sequence $\mathbf{V}$. For example, the apparatus may be configured to perform an optimization method in order to find the at least one unknown parameter of the model as follows. The apparatus may set the unknown parameter to different values and compare the resulting model ($\alpha \ \cdot^{\cdot} \ \Gamma$) with the one or more correlation sequences $\mathbf{V}$. The apparatus may search the value of the unknown parameter that provides an optimal matching between the model $\alpha \ \cdot^{\cdot} \ \Gamma$ and the one or more correlation sequences $\mathbf{V}$. The optimisation method may result in determining the position of the apparatus. The position of the apparatus may be a location or position in a three-dimensional (3D) space, or over a two-dimensional (2D) surface (e.g., Earth's surface or a building floor). That is, the determined position of the apparatus may be a 2D position or 3D position.

The present subject matter may thus be advantageous as it may enable a centimetre-level position accuracy of the apparatus. The present positioning method may obtain the location of the apparatus by exploiting a) the reference signal dependency on the apparatus location and on the carrier frequency b) the interdependencies between the signal attenuation coefficients across all one or more carriers and c) the autocorrelation properties. The benefit of the present method may be that the apparatus uses the reference signal to obtain the location directly by exploiting a) and b) and c) and an approximate model of how a) and b) and c) are related to each other.

The present subject matter may advantageously process the received reference signals by sampling all the received reference signals (regardless of their node source or carrier frequency) with the same common sampling rate in order to obtain the receive sequences. The common sampling rate may be higher than all sampling rates used for the transmitted reference signals. Thus, signals with different resolutions may be brought to a common resolution.

In one example, the model may be simplified as follows. A reference carrier frequency may be selected from the multiple carrier frequencies and the attenuation factor of the non-selected carrier frequency may be defined as a function of the channel of the reference carrier frequency. The reference frequency may, for example, be a randomly selected carrier frequency or a user defined carrier frequency. The model may thus be a function of the attenuation factor of the reference carrier frequency. This example in combination with the application of the common sampling rate may allow to obtain a set of channel parameters common to all carriers which may ultimately enable the computation of the location of the apparatus.

The present subject matter may further improve the accuracy of the position determination by improving the model. For that, one or more parameters which are estimated or predetermined may be processed as unknown parameters. This may particularly be advantageous in case these parameters are time dependent. For example, the predetermined or predicted value of the clock offset $\tau_0$ may be accurate or correct only for a certain time period. In this case, by using it as unknown parameter of the model, an up-to-date value of the clock offset $\tau_0$ may be obtained.

In one example, the model may comprise as unknown parameters the clock offset $\tau_0$ of the apparatus and the position of the apparatus. The attenuation factor(s) $\alpha$ may be predicted or predetermined. The optimization method may thus search for the values of both the position of the apparatus and the clock offset $\tau_0$ that provide an optimal matching between the model $\alpha \cdot \cdot \Gamma$ and the one or more correlation sequences **V**.

In one example, the model may comprise as unknown parameters the position of the apparatus and the attenuation factor(s) $\alpha$. The clock offset $\tau_0$ may be predicted or predetermined. The optimization method may thus search for the values of both the position of the apparatus and the attenuation factor(s) $\alpha$ that provide an optimal matching between the model $\alpha \cdot \cdot \Gamma$ and the one or more correlation sequences **V**.

In one example, the model may comprise as unknown parameters the position of the apparatus, the attenuation factor(s) $\alpha$ and the clock offset $\tau_0$. The optimization method may thus search for the values of the position of the apparatus, the attenuation factor(s) $\alpha$ and the clock offset $\tau_0$ that provide an optimal matching between the model $\alpha \cdot \cdot \Gamma$ and the one or more correlation sequences **V**.

The present subject matter may further control the balance between accuracy of the model and complexity of the model by simplifying the definition of the attenuation factors $\alpha$. In one example, the definition of the one or more attenuation factors $\alpha$ may be simplified using the following relation between the attenuation factor at carrier frequency $f_m$ and the attenuation factor at the reference carrier frequency $f_x$ (e.g., x = 1): $\alpha^{(f_m)} = \left(\alpha^{(f_x)}\right)^{\frac{g_m}{g_x}}$ , where $g_m$ is the known path loss exponent. The reference carrier frequency $f_x$ may, for example, be a randomly selected carrier frequency or a user defined carrier frequency. This example may reduce the number of unknown parameters while still providing accurate positioning results taking into account up-to-date channel impairments.

The present subject matter may further improve the accuracy of the model by splitting the position of the apparatus. In one example, the position of the apparatus may be defined by a height position and 2D horizontal position, wherein the unknown parameters comprise the height position and the horizontal position, wherein the optimization is performed to find separately the height position and the longitudinal position.

In one example, the optimization method may be performed for minimizing the difference between the one or more correlation sequences **V** and the model $\alpha \cdot \cdot \Gamma$. The optimization method may, for example, be performed for solving the following optimization problem $(\widehat{x}, \widehat{y}, \widehat{z}, \widehat{a}, \widehat{\tau_0}) = \arg \min_{x,y,z,\alpha} \left( \left\| \mathbf{V} - \alpha \cdot \cdot \mathbf{\Gamma} \right\|_2^2 \right)$ which minimizes the L2 norm of the difference between the one or more correlation sequences **V** and the model $\alpha \cdot \cdot \Gamma$.

The present subject matter may further improve the accuracy of the position determination by using optimal techniques to perform the optimization method. In one example, in case the model has more than one unknown parameter, the optimization method may be performed using the coordinate descent technique where the variables of the coordinate descent technique are the unknown parameters. This technique may be simple and may advantageously be implemented in apparatuses with limited resources such as a UEs. The coordinate descent technique may be defined as follows for two variables. Given a function of two variables f(x,y) to be minimized. In the first iteration: variable y may be fixed (in s1) y=y0, f(x, y0) may be minimized (in s2) with respect to x to obtain x0, and then f(x0, y) may be minimized (in s3) with respect to y to obtain y1. s1 to s3 may be repeated in the next iteration where y0=y1 in s1. This may be repeated until convergence. The present subject matter may advantageously use the coordinate descent technique by controlling the number and type of variables. In one example, the variables may be the clock offset $\tau_0$ of the apparatus, the attenuation factor(s) $\alpha$, and the position of the apparatus. In another example, the number of variables may be increased by defining the position of the apparatus using the 2D horizontal position of the apparatus and the height position of the apparatus.

The present subject matter may further be advantageous as it may enable an accurate processing method for obtaining the reference sequence $r^{(fm)}$. For example, the apparatus may receive a number $R^{fm}$ of one or more signature sequences in the same carrier frequency $f_m$, where $R^{fm} \geq 1$. For example, the $R^{fm}$ signature sequences may be received in one reference signal in the carrier frequency $f_m$ or in a number $R^{fm}$ of reference signals which are transmitted in the same carrier frequency $f_m$, that is, the total number of reference signals R may be the sum of all individual numbers $R^{fm}$, $R = \sum_{f_m} R^{fm}$. The apparatus may process the received reference signals per carrier frequency. In one example, for a given carrier frequency $f_m$, the apparatus may derive a number $R^{fm}$ of individual signature sequences ( $r_k^{(f_m)}$ ) of respective carrier frequency $f_m$. The $R^{fm}$ individual signature sequences may each be sampled according to a respective initial sampling rate. This may, for example, be performed by an existing analogue to digital converter (ADC) module of the apparatus. For example, the ADC module may collect $N_k$ signal samples for a total duration of $T$. The apparatus may resample the $R^{fm}$ individual signature sequences in accordance with a common sampling rate in order to obtain $N$ signal samples, where $N > N_k$. This may result in a number $R^{fm}$ of resampled signature sequences. The $R^{fm}$ resampled signature sequences may be combined for obtaining the receive sequence $r^{(fm)}$ associated with the given carrier frequency $f_m$, e.g., $r^{(f_m)} = \sum_{k=1}^{R^{fm}} r_k^{(f_m)}$ . The resampling rate may, for example, be higher than the initial sampling rates. This resampling may be advantageous for the following reason. Using the model to estimate the position of the apparatus may be limited by the initial sampling resolution of the system. To remove such limitation, the resampling is performed with a higher resolution. That is, the resampling may result in a number $N$ of samples in the time period $T$ which is higher than the number of samples obtained by the initial samplings for the same period $T$. This example may further be advantageous as it may seamlessly be integrated in existing systems which already have this initial sampling implemented.

In one alternative example, the apparatus may process the received reference signals per carrier frequency as follows. For a given carrier frequency $f_m$, the apparatus may derive a number $R^{fm}$ of individual signature sequences which are received in the carrier frequency $f_m$. The $R^{fm}$ individual signature sequences may each be sampled according to the common resampling rate. The $R^{fm}$ sampled signature sequences may be combined for obtaining the receive sequence $r^{(fm)}$ associated with the given carrier frequency $f_m$. This example may save processing resources compared to the previous example as it may perform the sampling at once.

In one example, the apparatus is configured to perform the method in response to receiving a localization request from a core network element. The core network element may, for example, be location management function (LMF).

In one example, the reference signal may be a Positioning Reference Signal (PRS). This may be advantageous as it may enable a seamless integration of the present subject matter in existing systems. It may also save resources that would otherwise be used to define new reference signals.

In one example, the model may be determined mathematically as follows. For each reference signal $s_k^{(fm)}$ , a channel response may be defined as follows: $h_k^{(fm)}(t) = \alpha_k^{(fm)}\delta(t - \tau_k) + \sum_{l=1}^{L_k} \alpha_k^{(fm)}(l)\delta(t - \tau_k(l))$ , where the sum is of all other $L_k$ signal reflections, called channel tail. This channel response may be approximated as follows: $h_k^{(fm)}(t) \approx \alpha_k^{(fm)}\delta(t - \tau_k)$ . The correlation sequence may be defined in continuous time domain as follows: $v_k^{(fm)}(t) = \left(r^{(fm)} \star s_k^{(fm)}\right)(t)$ , where $r^{(fm)}(t) = \sum_{k=1}^{K}\left(s_k^{(fm)} * h_k\right)(t) + n(t)$ , where n(t) is the Additive white Gaussian noise (AWGN). Using the approximated channel response, the correlation sequence may be modelled as follows: $v_k^{(fm)}(t) \approx \alpha_k^{(fm)}\Gamma_k\left(t - \tau_0 - \frac{d_k}{c}\right)$ .

In one example, the apparatus may comprise multiple antennas for receiving reference signals sent in accordance with a multiple input multiple output (MIMO) technique.

In this case, the correlation sequences $\mathbf{V}$ and the model $\alpha \therefore \Gamma$ may be indexed with an antenna index $\alpha$ as follows: $V_a \approx \alpha \therefore \Gamma^{(a)}$, a = 1:A, where A is the total number of antennas in the apparatus, and $\Gamma^{(a)}$ may be defined as follows: $\Gamma^{(a)}(n, k) = \Gamma_k\left((n - 1)w_s - t_0 - \frac{\sqrt{(x_k - x - dxa)^2 + (y_k - y - dya)^2 + (z_k - z - dza)^2}}{c}\right)$ , where (x, y, z) is the unknown location of the apparatus reference antenna and dxa, dya, dza are known distances between the reference antenna and antenna "a". Then the model can be rewritten as follows:

$$\mathbf{V} = \begin{bmatrix} V_1 \\ ... \\ V_A \end{bmatrix} \approx \begin{bmatrix} \alpha \therefore \Gamma^{(1)} \\ ... \\ \alpha \therefore \Gamma^{(A)} \end{bmatrix}$$

The present subject matter may comprise the following examples.

Example 1: An apparatus comprising: at least one processor; an antenna; and at least one memory storing instructions that, when executed by the at least one processor, cause the apparatus at least to perform: receiving reference signals from at least one node, the reference signals being received in multiple carrier frequencies; processing the reference signals for obtaining per carrier frequency a signature sequence, herein referred to as receive sequence; generating per received reference signal a corresponding signature sequence, herein referred to as transmit sequence; combining the receive sequences with the transmit sequences in time domain to produce carrier-dependent channel information; using the transmit sequences and attenuations of the reference signals for defining a model representing the channel information, the model comprising at least one parameter, the parameter comprising a position of the apparatus; determining a value of the at least one parameter that enables to match the model to the channel information; and providing the determined position of the apparatus.

Example 2: A non-transitory computer readable medium comprising program instructions that, when executed by an apparatus, cause the apparatus to perform at least the following: receiving reference signals from at least one node, the reference signals being received in multiple carrier frequencies; processing the reference signals for obtaining per carrier frequency a signature sequence, herein referred to as receive sequence; generating per received reference signal a corresponding signature sequence, herein referred to as transmit sequence; combining the receive sequences with the transmit sequences in time domain to produce carrier-dependent channel information; using the transmit sequences and attenuations of the reference signals for defining a model representing the channel information , the model comprising at least one parameter, the parameter comprising a position of the apparatus; determining a value of the at least one parameter that enables to match the model to the channel information; and providing the determined position of the apparatus.

Example 3: An apparatus comprising means, the means being configured for receiving reference signals from at least one node, the reference signals being received in multiple carrier frequencies; processing the reference signals for obtaining per carrier frequency a signature sequence, herein referred to as receive sequence; generating per received reference signal a corresponding signature sequence, herein referred to as transmit sequence; correlating the receive sequences with the transmit sequences in time domain to produce correlation sequences; using the transmit sequences and transmission-induced attenuations of the reference signals respectively for defining a model representing the correlation sequences, the model having at least one parameter, the parameter comprising a position of the apparatus; determining a value of the at least one parameter that enables to match the model to the correlation sequences; and providing the determined position of the apparatus.

Example 4: An apparatus comprising means, the means being configured for: receiving reference signals from at least one node, the reference signals being received in multiple carrier frequencies; processing the reference signals for obtaining per carrier frequency a signature sequence, herein referred to as receive sequence; generating per received reference signal a corresponding signature sequence, herein referred to as transmit sequence; combining the receive sequences with the transmit sequences in time domain to produce correlation sequences; using the transmit sequences and attenuations of the reference signals for defining a model representing the correlation sequences, the model comprising at least one parameter, the parameter comprising a position of the apparatus; determining a value of the at least one parameter that enables to match the model to the correlation sequences; and providing the determined position of the apparatus. In one example, the correlation sequences may indicate the carrier-dependent channel information.

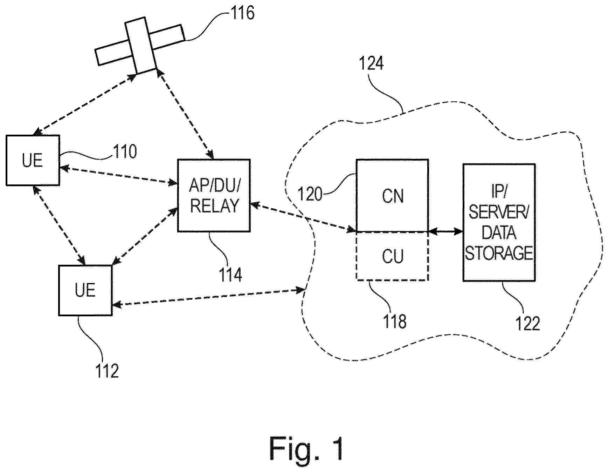

**FIG. 1** depicts examples of simplified system architectures only showing some elements and functional entities, all being logical units, whose implementation may differ from what is shown. The connections shown in FIG.1 are logical connections; the actual physical connections may be different. It is apparent to a person skilled in the art that the system typically comprises also other functions and structures than those shown in FIG.1.

The embodiments are not, however, restricted to the system given as an example but a person skilled in the art may apply the solution to other communication systems provided with necessary properties.

The example of FIG.1 shows a part of an exemplifying radio access network.

FIG.1 shows devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 20 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented. 5G enables using multiple input - multiple output (MIMO) antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is depicted in FIG.1 by "cloud" 124). The communication system may also comprise a central control entity, or a like, providing facilities for networks of different operators to cooperate for example in spectrum sharing.

The technology of Edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 114) and non-real time functions being carried out in a centralized manner (in a centralized unit, CU 118).

It should also be understood that the distribution of labour between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. One of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)nodeBs), a home node B gateway, or HNB-GW (not shown in FIG.1). A HNB Gateway (HNB-GW), which is typically installed within an operator's network may aggregate traffic from a large number of HNBs back to a core network.

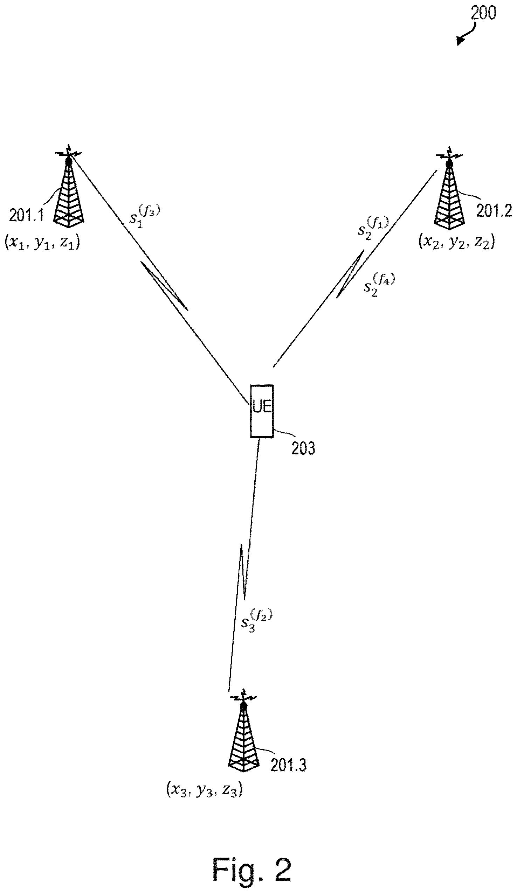

FIG. 2 is a schematic illustration of a wireless communication system 200. The communication system 200 may, for example, be configured to use a time division duplex (TDD) technique for data transmission.

For simplicity, communication system 200 is shown to include three nodes 201.1, 201.2, 201.3 and one user equipment 203. Each node of the three nodes 201.1, 201.2 and 201.3 may, for example, be eNodeB or gNB e.g., as described with reference to FIG. 1. That is, the communication system 200 may support a same RAT or different RATs.

The UE 203 may communicate wirelessly with the base stations 201.1, 201.2, 201.3 using RF signals and standardized protocols for the modulation of the RF signals and the exchange of information packets.

In this particular example, the nodes 201.1, 201.2 and 201.3 may be located at known locations which may be represented in a reference coordinate system as $(x_k, y_k, z_k)$, where $k$ = 1, 2, 3 in the example of FIG. 2. The UE 203 may receive reference signals such as PRSs from the nodes 201.1, 201.2 and 201.3. For example, the node 201.1 may broadcast the reference signal $s_1^{(f_3)}$ in the carrier frequency $f_3$. The node 201.2 may broadcast the reference signals $s_2^{(f_1)}$ and $s_2^{(f_4)}$ in the carrier frequency $f_1$ and $f_4$. This may, for example, be performed using carrier aggregation technique. The node 201.3 may broadcast the reference signal $s_3^{(f_2)}$ in the carrier frequency $f_2$.

The UE 203 may be configured to determine its location according to the present subject matter by using the reference signals, $s_1^{(f_3)}$, $s_2^{(f_1)}$, $s_2^{(f_4)}$ and $s_3^{(f_2)}$.

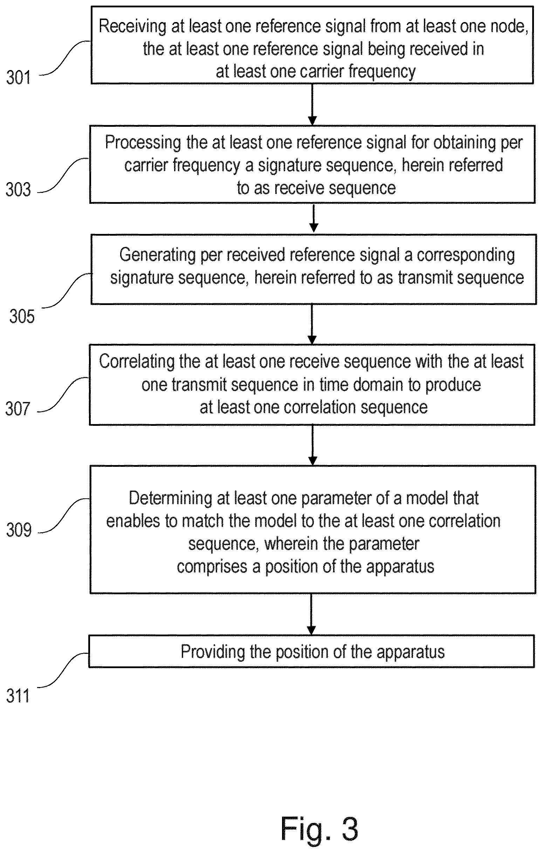

FIG. 3 is a flowchart of a method for determining the position of an apparatus according to an example of the present subject matter. For the purpose of explanation, the method described in FIG 3 may be implemented in the system illustrated in FIG. 2, but is not limited to this implementation. The method may, for example, be performed by an apparatus such as the user equipment 203.

The method starts at step 301, where the apparatus receives at least one reference signal from at least one node such as the nodes 201.1-3. The at least one reference signal may be received in at least one carrier frequency $f_m$. For example, the apparatus may receive $R$ reference signals, where $R \geq 1$. The apparatus may receive the $R$ reference signals $s_k^{(f_m)}$ from $K$ node(s), where $K \geq 1$ and $1 \leq k \leq K$. The $R$ reference signals $s_k^{(f_m)}$ may be received in $M$ carrier frequencies, where $M \geq 1$ and $1 \leq m \leq M$.

Upon receiving the at least one reference signal, the method proceeds to step 303 where the apparatus may process the at least one reference signal for obtaining per carrier frequency $f_m$ a signature sequence, herein referred to as receive sequence $r^{(f_m)}$. For example, for each carrier frequency $f_m$, the receive sequence may be defined as

$$r^{(f_m)} = \sum_{k=1}^{R^{fm}} r_k^{(f_m)}$$

in case a number $R^{fm}$ of reference signals are received in the carrier frequency $f_m$, where $r_k^{(f_m)}$ is the signature sequence obtained from the received reference signal $s_k^{(f_m)}$. If one reference signal is received in the carrier frequency $f_m$, then the receive sequence may be defined as: $r^{(f_m)} = r_k^{(f_m)}$. Step 303 may result in $M$ receive sequences.

The apparatus may generate in step 305 per received reference signal a corresponding transmit sequence $y_k^{(f_m)}$. This may result in $K$ generated transmit sequences.

The apparatus may correlate in step 307 the $M$ sequences $r^{(f_m)}$ with the $K$ transmit sequence $y_k^{(f_m)}$ in time domain to produce M $\times$ K correlation sequences $v_k^{(f_m)}$. The M $\times$ K correlation sequences $v_k^{(f_m)}$ may indicate or comprise the carrier-dependent channel information.

The apparatus may determine in step 309 at least one unknown parameter of a model that enables to match the model to the M $\times$ K correlation sequences, wherein the model represents the M $\times$ K correlation sequences. The model may be defined using the transmit sequences and attenuations of the reference signals due to transmissions. In one example, the model is the $K$ autocorrelations $\Gamma_k$ of the $K$ transmit sequences $y_k^{(f_m)}$ respectively, wherein the autocorrelations are weighted with attenuation factors of the reference signals respectively. The autocorrelation $\Gamma_k$ is determined for a delay with which the reference signal $s_k^{(f_m)}$ arrives at the apparatus from the node $k$. The at least one unknown parameter comprises a position of the apparatus.

The apparatus may provide the determined position of the apparatus in step 311.

In case $K > 1$ and $M > 1$, the model may be provided as follows:

$$
\begin{pmatrix}
\begin{pmatrix}
v_1^{f1}(0) \\
v_1^{f1}(1) \\
\ldots \\
v_1^{f1}(N-1)
\end{pmatrix} & & \ldots & \\
& \ddots & & \\
& \vdots & \begin{pmatrix}
v_K^{fM}(0) \\
v_K^{fM}(1) \\
\ldots \\
v_K^{fM}(N-1)
\end{pmatrix} &
\end{pmatrix} =
$$

$$
\begin{pmatrix}
\begin{pmatrix}
\alpha_1^{f1} \times \Gamma_1(0) \\
\alpha_1^{f1} \times \Gamma_1(1) \\
\ldots \\
\alpha_1^{f1} \times \Gamma_1(N-1)
\end{pmatrix} & & \ldots & \\
& \ddots & & \\
& \vdots & \begin{pmatrix}
\alpha_K^{fM} \times \Gamma_K(0) \\
\alpha_K^{f1} \times \Gamma_K(1) \\
\ldots \\
\alpha_K^{fM} \times \Gamma_K(N-1)
\end{pmatrix} &
\end{pmatrix},
$$

where $N$ is the number of samples and $\alpha_k^{fm}$ is the attenuation factor. In case $K = 1$ and $M = 1$, the model may be defined as follows: $v_1^{(f_1)} = \alpha_1^{(f_1)} \times \Gamma_1$.

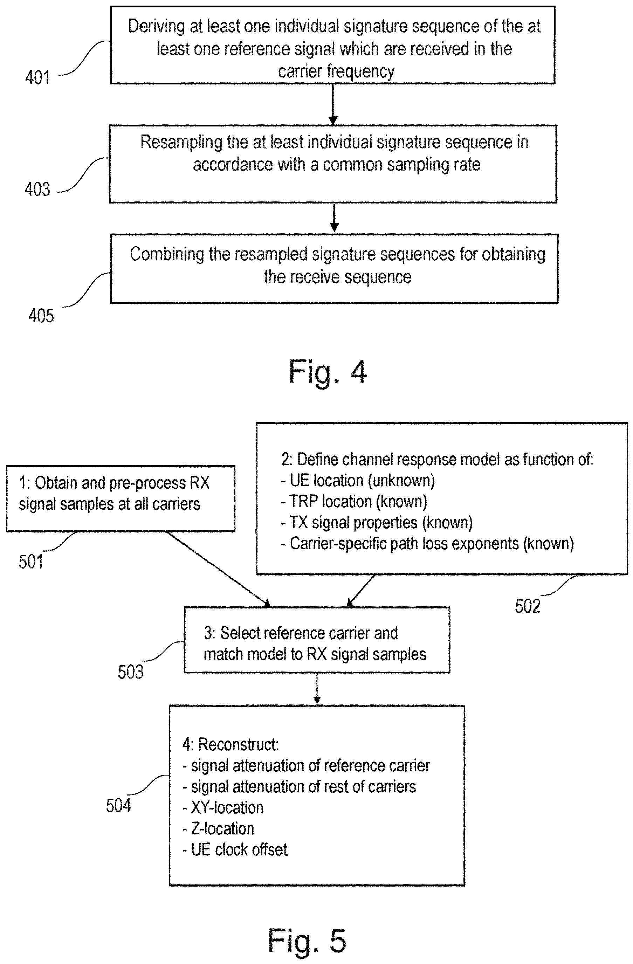

**FIG. 4** is a flowchart of a method for obtaining a receive sequence according to an example of the present subject matter. For the purpose of explanation, the method described in FIG 4 may be implemented in the system illustrated in FIG. 2, but is not limited to this implementation. The method may, for example, be performed by an apparatus such as the user equipment 203.

At least one individual signature sequence may be derived in step 401 from of at least one received reference signal, wherein the at least one individual signature sequences are sampled according to a respective initial sampling rate. For example, the apparatus may derive a number $R^{fm}$ signature sequences which are received in the same carrier frequency $f_m$, where $R^{fm} \geq 1$. For example, for each received reference signal in the frequency $f_m$, the $R^{fm}$ individual signature sequence(s) $r_k^{(f_m)}$ may be obtained. This may be performed by sampling the reference signal for a period of time $T$ in accordance with the initial sampling rate.

The at least individual signature sequence may be resampled in step 403 in accordance with a common sampling rate. For example, for each carrier frequency $f_m$, the $R^{fm}$ individual signature sequence(s) $r_k^{(f_m)}$ may be resampled in accordance with the common sampling rate.

The resampled signature sequences may be combined in step 405 for obtaining the receive sequence. For example, for each carrier frequency $f_m$, the receive sequence may be obtained by the sum: $r^{(f_m)} = \sum_{k=1}^{R^{fm}} r_k^{(f_m)}$. In case, for a given carrier frequency $f_m$, the number of individual signature sequences is one, $R^{fm} = 1$, then the receive sequence is that one individual (resampled) signature sequence $r^{(f_m)} = r_k^{(f_m)}$. In other words, the combination may not be needed in case $R^{fm} = 1$.

**FIG. 5** is a flowchart of a method for determining the position of an apparatus according to an example of the present subject matter. For the purpose of explanation, the method described in FIG 5 may be implemented in the system illustrated in FIG. 2, but is not limited to this implementation. The method may, for example, be performed by an apparatus such as the user equipment 203.

The received (RX) signal may be resampled in step 501 at a selected rate, for each carrier, to obtain a common signal resolution across carriers. A model of the channel response may be cast in step 502 on the resampled grid and as a function of: the 3D UE location and each TRP 3D location, the carrier frequency relative to a randomly selected reference carrier, the transmitted (TX) signal correlation properties, the RX signal properties, the offset between the UE clock and the network (NW) clock. A matching of the cast model to the resampled RX signal may be performed in step 503. The matching may be performed by iterating in step 504 between reconstructing the: attenuation coefficient of each TX signal at the reference carrier, attenuation coefficient of each TX signal at the non-reference carriers using the reference carrier and a known path loss exponent, UE horizontal location, UE height and UE clock offset.

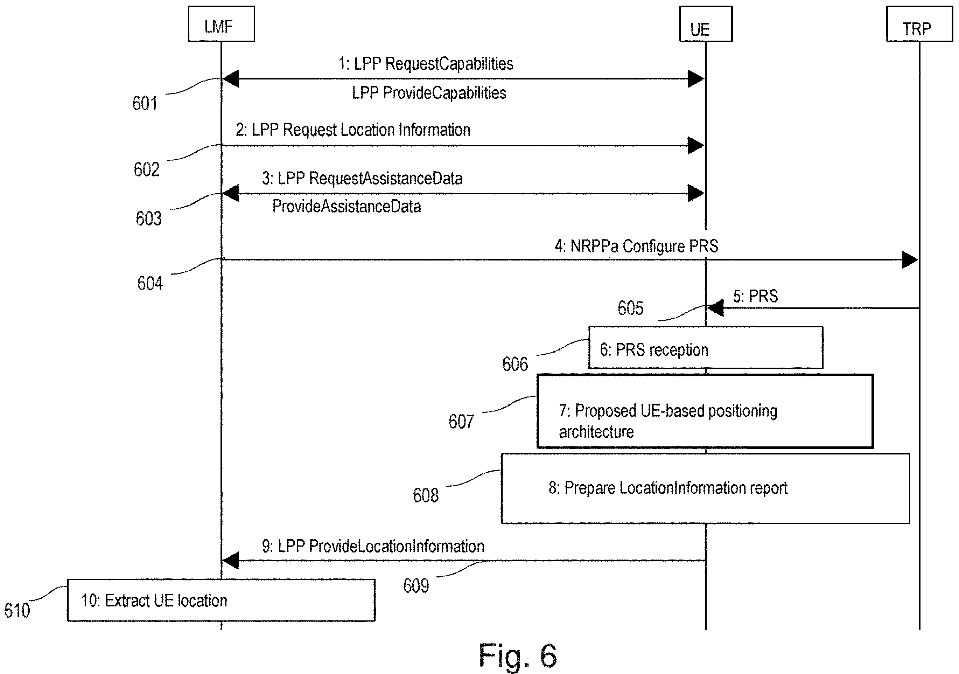

**FIG. 6** is a signaling diagram illustrating a method for determining the position of an apparatus according to an example of the present subject matter.

In step 601, the location management function (LMF) may receive from the UE, upon request, the UE capabilities. The LMF may request in step 602 the location information from the UE. In step 603, the UE may receive from the LMF, upon request, assistance data. The LMF may configure using a NR Positioning Protocol A (NRPPa) interface in step 604 the TRP to send the PRS. In response, the TRP may send in step 605 a PRS to the UE. The UE may receive in step 606 the PRS. In step 607, the UE may determine the location of the UE using the received PRS according to the present subject matter. The UE may prepare in step 608 a location information report. The UE may send in step 609 the location information report to the LMF. The LMF may extract in step 610 from the report the location of the UE.

Thus, the UE may be triggered by the 5G NR LMF to perform UE-based localization e.g., receive downlink (DL) PRS signals and compute its own location estimate. The session may be configured via standard LTE positioning protocol (LPP) and NRPPa messaging as defined in TS. 37.355 and TS. 37.455. The positioning session is UE-based DL positioning. The signals generation, metrics definition and reporting for either session is defined in TS 36.211, TS 36.214 and TS 37.355 and TS 37.455 specifically. Specifically, for a DL positioning, PRS signal transmission may happen as described in section 6.10 of TS 36.211. To sum up, the UE is requested by the LMF to estimate its own location using one or more PRS signals. The request and PRS configurations are transferred to the UE via LPP assistance data (AD) and to the TRPs via NRPPa interface. After receiving AD, the UE listens for PRS and triggers the present method (step 607).

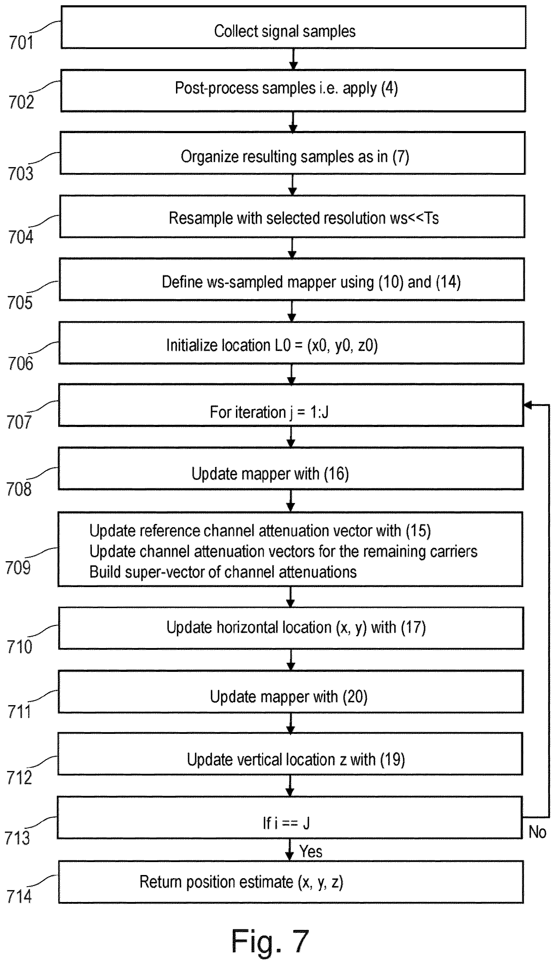

**FIG. 7** is a flowchart of a method for determining the position of an apparatus according to an example of the present subject matter. The method of FIG. 7 may provide an example implementation of the coordinate descent technique.

An NR target UE receives several PRSs from TRP k, k = 1:K on carriers $f_1, \ldots, f_M$, each over a channel with impulse response:

$$h_k^{(fm)}(t) = \alpha_k^{(fm)}\delta(t - \tau_k) + \sum_{l=1}^{L_k}\alpha_k^{(fm)}(l)\delta\big(t - \tau_k(l)\big) \quad (1).$$

The first term $\alpha_k^{(fm)}$ describes the attenuation of the k-th signal sent over line of sight at carrier $(f_m)$ and $\tau_k = \tau_0 + \dfrac{d_k}{c}$ is the delay with which the signal arrives at the UE. The delay is the sum between the UE clock offset $\tau_0$ (w.r.t. each TRP, since all TRPs are synchronized with each other) and the propagation delay:

$$\frac{d_k}{c} = \frac{\sqrt{(x_k-x)^2+(y_k-y)^2+(z_k-z)^2}}{c} \quad (2),$$

where $(x_k, y_k, z_k)$ is the known 3D location of TRP $k$ and L = (x, y, z) is the unknown UE location which needs to be estimated and reported to the LMF and c = 3e8 m/s. The second term in equation (1) describes the sum of all other $L_k$ signal reflections, called channel tail. The received signal at time instance t and carrier $(f_m)$ at the UE may be defined as follows

$$r^{(fm)}(t) = \sum_{k=1}^{K} \left( s_k^{(fm)} * h_k \right)(t) + n(t) \quad (3),$$

where $s_k^{(fm)}$ is the PRS transmitted by TRP k on carrier ($f_m$) and it is known by the UE and n(t) is AWGN. The UE collects signal samples in step 701 for a total duration of T and the resulting samples are cross-correlated in step 702 with each TX sequence $s_k$ to produce K RX sequences:

$$v_k^{(fm)}(t) = \left( r^{(fm)} \star s_k^{(fm)} \right)(t), \forall\, k = 1{:}K \quad (4).$$

The sequences are defined in continuous time domain.

Then, the UE task is to estimate its own location L using the K sequences from equation (4), namely from $v_k^{(fm)}(t), t \in (0, T], \; k = 1{:}K$. To do that, the following model simplifications may be used. The channel response (1) may be approximated as:

$$h_k^{(fm)}(t) \approx \alpha_k^{(fm)} \delta(t - \tau_k) \quad (5).$$

The approximation in equation (5) is used in equation (3) and then equation (3) is used in equation (4). This may provide an approximation of the received signal as:

$$v_k^{(fm)}(t) \approx \alpha_k^{(fm)} \Gamma_k \left( t - t_0 - \frac{d_k}{c} \right) \quad (6),$$

where $\Gamma_k$ is the known autocorrelation function of the k-th TX PRS and $t_0 = \tau_0$ is the UE clock offset. All the samples of the signal in equation (6) may be collected in a vector $v_k^{(fm)} = \left[ v_k^{(fm)}(0), v_k^{(fm)}(T_s), \dots, v_k^{(fm)}(T) \right]^T$ of length NN, where $T_s$ is the sampling rate of the system. Then, equation (6) becomes:

$$v_k^{(fm)} \approx \alpha_k^{(fm)} \gamma_k, \qquad \forall k = 1{:}K \quad (7),$$

where the kth sampled (known) autocorrelation vector is:

$$\gamma_k = \left[ \Gamma_k \left( 0 - t_0 - \frac{d_k}{c} \right), \; \Gamma_k \left( T_s - t_0 - \frac{d_k}{c} \right), \; \Gamma_k \left( 2T_s - t_0 - \frac{d_k}{c} \right), \dots, \Gamma_k \left( T - t_0 - \frac{d_k}{c} \right) \right]^T \quad (8).$$

This may enable to organize in step 703 the samples of step 702 according to equation (7).

Using equation (7) to estimate the location L of the UE may be limited by the sampling resolution of the system $T_s$. To remove such limitation, the RX vector $v_k^{(fm)}$ may be resampled in step 704 with a resolution $w_s \ll T_s$ and the resampled signal $v_k^{(R,fm)}$ is approximated as:

$$v_k^{(R,fm)} \approx \alpha_k \gamma_k^{w_s}, \quad \forall k = 1{:}K \quad (9),$$

where the k-th $w_s$ -sampled autocorrelation vector may be defined as:

$$\gamma_k^{w_s} = \left[\Gamma_k\left(0 - t_0 - \frac{d_k}{c}\right), \ \Gamma_k\left(w_s - t_0 - \frac{d_k}{c}\right), \Gamma_k\left(2w_s - t_0 - \frac{d_k}{c}\right), \dots, \Gamma_k\left(T - t_0 - \frac{d_k}{c}\right)\right]^T \quad (10).$$

All K resampled signals $v_k^{(R,f_m)}$ may be collected into a matrix: $V^{(f_m)} =$

$$V^{(f_m)} = \left[v_1^{(R,f_m)}, \dots, v_K^{(R,f_m)}\right] \quad (11).$$

(11). (11). Then, the received signal model may be defined as:

$$V^{(f_m)} \approx \alpha^{(f_m)} \ .^{\cdot} \ \Gamma, \qquad \forall m = 1:M \qquad (12),$$

where $\alpha^{(f_m)}$ may be defined as $\alpha^{(f_m)} = \left[\alpha_1^{(f_m)}, \dots, \alpha_K^{(f_m)}\right]^T$ and $\Gamma = \left[\gamma_1^{w_s} \ \gamma_2^{w_s}, \dots, \gamma_K^{w_s}\right]$, where the (n,k) entry in the matrix $\Gamma$ is:

$$\Gamma(n, k) = \Gamma_k\left((n - 1)w_s - t_0 - \frac{\sqrt{(x_k - x)^2 + (y_k - y)^2 + (z_k - z)^2}}{c}\right) \quad (13).$$

The operator ($.^{\cdot}$) applied as $\alpha^{(f_m)} \ .^{\cdot} \ \Gamma$ indicates that element indexed $p$ of the vector $\alpha^{(f_m)}$ multiplies the p-th column of

$$\Gamma: \alpha^{(f_m)} \ .^{\cdot} \ \Gamma = \left[\alpha_1^{(f_m)}, \dots, \alpha_K^{(f_m)}\right]^T \ .^{\cdot} \ \left[\gamma_1^{w_s} \ \gamma_2^{w_s}, \dots, \gamma_K^{w_s}\right] =$$

$$\left[\alpha_1^{(f_m)}\gamma_1^{w_s}, \ \alpha_2^{(f_m)}\gamma_2^{w_s}, \dots, \ \alpha_K^{(f_m)}\gamma_K^{w_s}\right].$$

Next, **V** may be defined as:

$$\mathbf{V} = \begin{bmatrix} V^{(f_1)} \\ \dots \\ V^{(M)} \end{bmatrix} \quad (13.1)$$

and the following relation between the channel coefficient at frequency $f_m$ and at a randomly selected reference frequency $f_1$ may be assumed:

$$\alpha^{(f_m)} = \left(\alpha^{(f_1)}\right)^{\frac{g_m}{g_1}} \quad (13.2),$$

where $g_m$ is called the path loss exponent and it is known.

The reference channel coefficient vector may be selected as $\alpha^{(f_1)}$ and all coefficients may be collected into the

super-vector $\alpha = \left[\alpha^{(f_1)T}, \left(\left(\alpha^{(f_1)}\right)^{\frac{g_2}{g_1}}\right)^T, \dots, \left(\left(\alpha^{(f_1)}\right)^{\frac{g_M}{g_1}}\right)^T\right]^T$ where the only unknown is the reference coefficient vector. Then, the received signal at all carriers and from all TRPs reads:

$$V \approx \boldsymbol{\alpha} \odot \boldsymbol{\Gamma} \qquad (13.3).$$

Using equations (11), (12) and (13), the following optimization problem may be posed in step 705 in order to find the unknowns

$$(x, y, z): \left( \hat{x}, \hat{y}, \hat{z}, \widehat{\boldsymbol{\alpha}^{(f_1)}}, \hat{t_0} \right) = \arg \min_{x,y,z,\alpha} \left( \left\| V - \boldsymbol{\alpha} \odot \boldsymbol{\Gamma} \right\|_2^2 \right) \qquad (14).$$

To solve the optimization problem (14) the location of the UE may be initialized to (x0, y0, z0) in step 706 before an iterative method (defined by steps 707 to 714) is performed. The iterative method may be described as follows for an iteration j.

The channel attenuation $\widehat{\alpha^{(f_1)}}$ i.e., at iteration (j) solve:

$$\widehat{\boldsymbol{\alpha}^{(f_1)}} = \arg \min_{\alpha} \left( \left\| V - \boldsymbol{\alpha} \odot \hat{\boldsymbol{\Gamma}} \right\|_2^2 \right) \qquad (15),$$

where $\hat{\Gamma}$ is updated using the location and time offset estimates from iteration (j-1):

$$\hat{\Gamma}(n, k) = \Gamma_k \left( (n - 1)w_s - \hat{t_0} - \frac{\sqrt{(x_k - \hat{x})^2 + (y_k - \hat{y})^2 + (z_k - \hat{z})^2}}{c} \right) \qquad (16).$$

Note that the solving of equation (15) may be done using numerical solvers e.g., Newton method. Once the reference channel coefficient vector is obtained, the coefficients for the remaining carriers are computed by applying update of equation (13.2). Lastly, the super-vector estimate becomes

$$\hat{\boldsymbol{\alpha}} = \left[ \widehat{\boldsymbol{\alpha}^{(f_1)}}^T, \left( \left( \widehat{\boldsymbol{\alpha}^{(f_1)}} \right)^{\frac{g_2}{g_1}} \right)^T, \dots, \left( \left( \widehat{\boldsymbol{\alpha}^{(f_1)}} \right)^{\frac{g_M}{g_1}} \right)^T \right]^T.$$

Once the gains are updated during iteration (j), they are used to compute the 3D location. The horizontal location i.e., at iteration (j) solves:

$$\hat{x}, \hat{y} = \arg \min_{x,y} \left( \left\| V - \widehat{\boldsymbol{\alpha} \odot} \boldsymbol{\Gamma_z} \right\|_2^2 \right) \qquad (17),$$

where $\Gamma_z$ is updated using the heigh estimate z from iteration (j-1):

$$\hat{\Gamma_z}(n, k) = \Gamma_k \left( (n - 1)w_s - \hat{t_0} - \frac{\sqrt{(x_k - x)^2 + (y_k - y)^2 + (z_k - \hat{z})^2}}{c} \right) \qquad (18).$$

Note that the solving of equation (17) may be done using numerical solvers e.g., Newton method. The vertical location z i.e., height may be defined as: z =

$$\hat{z} = \arg \min_{x,y} \left( \left\| V - \hat{\boldsymbol{\alpha}} \odot \boldsymbol{\Gamma_{xy}} \right\|_2^2 \right) \qquad (19),$$

where $\widehat{\Gamma_{xy}}$ is updated using the horizontal location estimate from iteration (j) and time offset estimate from iteration (j-1):

$$\widehat{\Gamma_{xy}}(n, k) = \Gamma_k\left((n-1)w_s - \widehat{t_0} - \frac{\sqrt{(x_k-\hat{x})^2+(y_k-\hat{y})^2+(z_k-z)^2}}{c}\right) \quad (20).$$

Lastly, the time offset of the UE is computed as:

$$\widehat{t_0} = \arg\min_{t_0}\left(\left\|V - \hat{\alpha} \cdot \Gamma_{xyz}\right\|_2^2\right) \quad (21),$$

where $\widehat{\Gamma_{xyz}}$ is updated using the 3D location estimate from iteration (j):

$$\widehat{\Gamma_{xyz}}(n, k) = \Gamma_k\left((n-1)w_s - t_0 - \frac{\sqrt{(x_k-\hat{x})^2+(y_k-\hat{y})^2+(z_k-\hat{z})^2}}{c}\right) \quad (22).$$

The updates in equations (15), (17), (19), (21) may be repeated until convergence is achieved e.g., the position estimate between consecutive iterations is stable, or until a maximum number of iterations J has been reached. The position is stable in case the difference between the estimated positions of consecutive iterations is smaller than a threshold.

In an alternative example, the method can be extended to a MIMO setup, where the PRSs are received by multiple UE antennas. In that case, all received samples may be stacked column wise in equation (13.3).

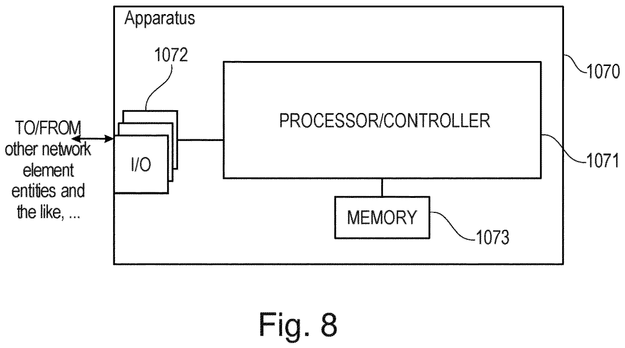

In **FIG. 8**, a block circuit diagram illustrating a configuration of an apparatus 1070 is shown, which is configured to implement at least part of the present subject matter. It is to be noted that the apparatus 1070 shown in FIG. 8 may comprise several further elements or functions besides those described herein below, which are omitted herein for the sake of simplicity as they are not essential for the understanding. Furthermore, the apparatus may be also another device having a similar function, such as a chipset, a chip, a module etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the above described subject matter. In particular, the apparatus 1070 may be configured to perform the method as described in connection with FIG 3, 4, 5 or 7.

For example, the processor 1071 is configured for: receiving at least one reference signal from at least one node, the at least one reference signal being received in at least one carrier frequency; processing the at least one reference signal for obtaining per carrier frequency a signature sequence, herein referred to as receive sequence; generating per received reference signal a corresponding signature sequence, herein referred to as transmit sequence; correlating the at least one receive sequence with the at least one transmit sequence in time domain to produce at least one correlation sequence; determining the at least one unknown parameter based the enable to match a model to the at least one correlation sequence; wherein the model represents the at least one correlation sequence, the model comprising at least one autocorrelation of the at least one transmit sequence respectively, the autocorrelation being determined for a delay with which the reference signal arrives at the apparatus, the model comprising at least one unknown parameter, the unknown parameter comprising a position of the apparatus; providing the determined position of the apparatus.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

**1.** An apparatus comprising:

means for receiving reference signals from at least one node, the reference signals being received in multiple carrier frequencies;
means for processing the reference signals for obtaining per carrier frequency a signature sequence, herein referred to as receive sequence;
means for generating per received reference signal a corresponding signature sequence, herein referred to as transmit sequence;
means for combining the receive sequences with the transmit sequences in time domain to produce carrier-dependent channel information;
means for using the transmit sequences and attenuations of the reference signals for defining a model representing the channel information, the model comprising at least one parameter, the parameter comprising a position of the apparatus;
means for determining a value of the at least one parameter that enables to match the model to the channel information; and
means for providing the determined position of the apparatus.

2. The apparatus of claim 1, wherein the model comprising autocorrelations of the transmit sequences respectively, the autocorrelation being determined for a delay with which the reference signal arrives at the apparatus, the autocorrelation being weighted with an attenuation factor representing the attenuation of the reference signal.

3. The apparatus of claim 2, further comprising means for: selecting a reference carrier frequency of the multiple carrier frequencies, and means for defining the attenuation factor of the reference signal received in the carrier frequency which is different from the reference carrier frequency as a function of the attenuation factor of the reference signal received in the reference carrier frequency.

4. The apparatus of claim 1, wherein the means for processing further comprises means to perform the processing for sampling the received reference signals with a common sampling rate.

5. The apparatus of claim 1, further comprising means for: using a matrix representation for the model and a matrix representation of the channel information, wherein a matrix element represents a distinct pair of carrier frequency and node.

6. The apparatus of claim 1, wherein the means for processing further comprises means to perform the processing by

    deriving at least one individual signature sequence of the at least one reference signal which are received in the carrier frequency, wherein the at least one individual signature sequences are sampled according to a respective initial sampling rate;
    resampling the at least individual signature sequence in accordance with a common sampling rate; and combining the resampled signature sequences for obtaining the receive sequence.

7. The apparatus of claim 1 wherein the means for processing further comprises means to perform the processing by:

    deriving at least one individual signature sequence of the at least one reference signal which are received in the carrier frequency, and combining the individual signature sequences for obtaining the signature sequence; wherein the individual signature sequences are sampled according to a common sampling rate.

8. The apparatus of claim 1, the matching being performed for minimizing a difference between the model and the channel information.

9. The apparatus of claim 1, wherein the at least one parameter further comprises attenuation factors.

10. The apparatus of claim 2, the delay being defined by the position of the apparatus and a clock offset of the apparatus, wherein the at least one parameter further comprises the clock offset.

11. The apparatus of claim 1, wherein the reference signals are received according to a multiple input multiple output (MIMO) technique.

12. The apparatus of claim 1, the position of the apparatus being a two-dimensional (2D) position or 3D position.

13. The apparatus of claim 1, wherein the means for combining is further configured to perform the combining by correlating the receive sequences with the transmit sequences in time domain to produce correlation sequences indicative of the carrier-dependent channel information

14. A method comprising:

    receiving by an apparatus reference signals from at least one node, the reference signals being received in multiple carrier frequencies;
    processing the reference signals for obtaining per carrier frequency a signature sequence, herein referred to as receive sequence, resulting in multiple receive sequences;
    generating per received reference signal a corresponding signature sequence, herein referred to as transmit sequence, resulting in multiple transmit sequences;

combining the receive sequences with the transmit sequences in time domain to produce carrier-dependent channel information;

using the transmit sequences and attenuations of the reference signals for defining a model representing the channel information, the model comprising at least one parameter, the parameter comprising a position of the apparatus;

determining a value of the at least one parameter that enables to match the model to the channel information; and

providing the determined position of the apparatus.

**15.** A computer program comprising computer executable instructions for causing an apparatus to perform at least the following:

receiving reference signals from at least one node, the reference signals being received in multiple carrier frequencies;

processing the reference signals for obtaining per carrier frequency a signature sequence, herein referred to as receive sequence, resulting in multiple receive sequences;

generating per received reference signal a corresponding signature sequence, herein referred to as transmit sequence, resulting in multiple transmit sequences;

combining the receive sequences with the transmit sequences in time domain to produce carrier-dependent channel information;

using the transmit sequences and attenuations of the reference signals for defining a model representing the channel information, the model comprising at least one parameter, the parameter comprising a position of the apparatus;

determining a value of the at least one parameter that enables to match the model to the channel information; and

providing the determined position of the apparatus.

Fig. 1

200

201.1
$(x_1, y_1, z_1)$

$s_1^{(f_3)}$

$s_2^{(f_1)}$

201.2
$(x_2, y_2, z_2)$

$s_2^{(f_4)}$

UE

203

$s_3^{(f_2)}$

201.3

$(x_3, y_3, z_3)$

Fig. 2

Receiving at least one reference signal from at least one node, the at least one reference signal being received in at least one carrier frequency

301

Processing the at least one reference signal for obtaining per carrier frequency a signature sequence, herein referred to as receive sequence

303

Generating per received reference signal a corresponding signature sequence, herein referred to as transmit sequence

305

Correlating the at least one receive sequence with the at least one transmit sequence in time domain to produce at least one correlation sequence

307

Determining at least one parameter of a model that enables to match the model to the at least one correlation sequence, wherein the parameter comprises a position of the apparatus

309

Providing the position of the apparatus

311

Fig. 3

Deriving at least one individual signature sequence of the at least one reference signal which are received in the carrier frequency

401

Resampling the at least individual signature sequence in accordance with a common sampling rate

403

Combining the resampled signature sequences for obtaining the receive sequence

405

Fig. 4

1: Obtain and pre-process RX signal samples at all carriers

501

2: Define channel response model as function of:
- UE location (unknown)
- TRP location (known)
- TX signal properties (known)
- Carrier-specific path loss exponents (known)

502

3: Select reference carrier and match model to RX signal samples

503

4: Reconstruct:
- signal attenuation of reference carrier
- signal attenuation of rest of carriers
- XY-location
- Z-location
- UE clock offset

504

Fig. 5

Fig. 6

EP 4 443 189 A1

701 → Collect signal samples

702 → Post-process samples i.e. apply (4)

703 → Organize resulting samples as in (7)

704 → Resample with selected resolution ws<<Ts

705 → Define ws-sampled mapper using (10) and (14)

706 → Initialize location L0 = (x0, y0, z0)

707 → For iteration j = 1:J

708 → Update mapper with (16)

709 → Update reference channel attenuation vector with (15)
Update channel attenuation vectors for the remaining carriers
Build super-vector of channel attenuations

710 → Update horizontal location (x, y) with (17)

711 → Update mapper with (20)

712 → Update vertical location z with (19)

713 → If i == J

No

Yes

714 → Return position estimate (x, y, z)

## Fig. 7

Apparatus

1072

TO/FROM
other network
element
entities and
the like, ...

I/O

PROCESSOR/CONTROLLER

MEMORY

1070

1071

1073

Fig. 8

Europäisches
Patentamt

European
Patent Office

Office européen
des brevets

# EUROPEAN SEARCH REPORT

**Application Number**

EP 24 16 5827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/111173 A1 (ERICSSON TELEFON AB L M [SE]) 21 June 2018 (2018-06-21) * page 1, line 8 - page 18, line 20 * * figures 1-6 * * abstract * | 1-15 | INV. G01S5/02 H04W64/00 |
| A | US 10 380 881 B2 (ORIGIN WIRELESS INC [US]) 13 August 2019 (2019-08-13) * column 13, line 3 - column 16, line 16 * * figure 37 * * abstract * | 1-15 | |
| A | 5gcar: "Deliverable D3.2, Report on Channel Modelling and Positioning for 5G V2X", , 30 November 2018 (2018-11-30), XP055939217, Retrieved from the Internet: URL:https://5gcar.eu/wp-content/uploads/2021/04/5GCAR_D3.2_v1.0.pdf [retrieved on 2022-07-06] * page 10, paragraph 2.1 - page 23, paragraph 2.2 * * abstract * | 1-15 | TECHNICAL FIELDS SEARCHED (IPC) G01S H04W |

The present search report has been drawn up for all claims

| Place of search | Date of completion of the search | Examiner |
|---|---|---|
| Munich | 29 July 2024 | von Walter, Sven-Uwe |

EPO FORM 1503 03.82 (P04C01)

## ANNEX TO THE EUROPEAN SEARCH REPORT
## ON EUROPEAN PATENT APPLICATION NO.

EP 24 16 5827

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2024

| Patent document cited in search report | | Publication date | Patent family member(s) | | Publication date |
|---|---|---|---|---|---|
| WO 2018111173 | A1 | 21-06-2018 | EP | 3552443 A1 | 16-10-2019 |
| | | | US | 2019353748 A1 | 21-11-2019 |
| | | | WO | 2018111173 A1 | 21-06-2018 |
| US 10380881 | B2 | 13-08-2019 | CN | 108700652 A | 23-10-2018 |
| | | | EP | 3387849 A1 | 17-10-2018 |
| | | | JP | 6623298 B2 | 18-12-2019 |
| | | | JP | 7320210 B2 | 03-08-2023 |
| | | | JP | 2019506772 A | 07-03-2019 |
| | | | JP | 2020065259 A | 23-04-2020 |
| | | | US | 2018365975 A1 | 20-12-2018 |
| | | | WO | 2017100706 A1 | 15-06-2017 |

EPO FORM P0459

For more details about this annex : see Official Journal of the European Patent Office, No. 12/82